# DEMANDE DE BREVET EUROPEEN

(11) **EP 4 593 271 A1**
(43) Date de publication de la demande: **30.07.2025**
(21) Numéro de dépôt: 25153032.5
(22) Date de dépôt: 21.01.2025
(51) Int. Cl.: H02M 1/00, H02M 3/156, H02M 3/158

(54) **ALIMENTATION A DECOUPAGE**

(30) Priorité: 29.01.2024 FR 2400814
(71) Demandeur: STMicroelectronics International N.V., 1228 Plan-les-Ouates, Geneva (CH)
(72) Inventeur: ORTET, Sebastien, 13790 Chateauneuf-le-rouge (FR); GIRAUDON, Florian, 13100 Aix-en-provence (FR)
(74) Mandataire: Cabinet Beaumont

(57) **Abrégé**

La présente description concerne une alimentation à découpage comprenant :
- un premier interrupteur reliant un premier noeud recevant une première tension d'alimentation à un deuxième noeud fournissant une deuxième tension de sortie ;
- un deuxième interrupteur reliant un troisième noeud recevant une quatrième tension de référence audit deuxième noeud de sortie ; et
- un comparateur adapté à comparer ladite deuxième tension de sortie à une troisième tension de comparaison,

dans lequel, lorsque l'alimentation à découpage fonctionne dans un mode à suppression d'impulsion, le comparateur est adapté à indiquer que la deuxième tension de sortie est supérieure à la troisième tension de comparaison pendant une partie de la phase de conduction dudit premier interrupteur, et
dans lequel l'alimentation à découpage transitionne d'un mode à suppression d'impulsion à un mode de conduction continue dès que ladite deuxième tension de sortie est inférieure à ladite troisième tension de comparaison.

## Description

### Domaine technique

La présente description concerne de façon générale les systèmes électroniques, et, en particulier, les circuits d'alimentation de ces systèmes. La description concerne plus particulièrement les alimentations à découpage et leurs différents modes de fonctionnement.

### Technique antérieure

Il existe plusieurs types de circuits d'alimentation électrique permettant de délivrer un couple courant/tension à un circuit, dispositif ou système électronique, ou plus généralement à une charge. Les alimentations linéaires et les alimentations à découpage sont des exemples de circuits d'alimentation.

Une alimentation à découpage est un circuit d'alimentation adapté à fournir une tension continue, généralement à partir d'une autre tension continue. Les alimentations à découpage sont généralement des convertisseurs DC/DC, mais certaines alimentations à découpage peuvent comprendre un étage de redressement leur permettant de prendre en entrée une tension alternative, par exemple, le secteur.

Il serait souhaitable de pouvoir améliorer au moins en partie certains aspects des alimentations à découpage connues.

### Résumé de l'invention

Il existe un besoin pour des alimentations à découpage plus performantes.

Il existe un besoin pour des alimentations à découpage consommant moins d'énergie.

Un mode de réalisation pallie tout ou partie des inconvénients des alimentations à découpage connues.

Selon un premier aspect, un mode de réalisation prévoit une alimentation à découpage présentant moins d'oscillations sur sa tension de sortie lors d'une transition d'un mode de suppression d'impulsion (PSK) à un mode de conduction continue (CCM).

Un mode de réalisation prévoit une alimentation à découpage comprenant un comparateur, comparant la tension de sortie de l'alimentation à découpage avec une tension de référence, dont la sortie est forcée à un pendant au moins 20% du temps de conduction d'un interrupteur de l'alimentation à découpage fournissant à la sortie une tension de référence, par exemple, la masse.

Un mode de réalisation prévoit une alimentation à découpage comprenant :
- un premier interrupteur reliant un premier noeud recevant une première tension d'alimentation à un deuxième noeud fournissant une deuxième tension de sortie ;
- un comparateur adapté à comparer ladite deuxième tension de sortie à une troisième tension de comparaison,
dans lequel, lorsque l'alimentation à découpage fonctionne dans un mode à suppression d'impulsion, le comparateur est adapté à indiquer que la deuxième tension de sortie est supérieure à la troisième tension de comparaison pendant une partie de la phase de conduction dudit premier interrupteur.

Un autre mode de réalisation prévoit un procédé de mise en oeuvre d'une alimentation à découpage comprenant :
- un premier interrupteur reliant un premier noeud recevant une tension d'alimentation à un deuxième noeud fournissant une deuxième tension de sortie ;
- un comparateur adapté à comparer ladite deuxième tension de sortie à une troisième tension de comparaison,
dans lequel, lorsque l'alimentation à découpage fonctionne dans un mode à suppression d'impulsion, le comparateur est adapté à indiquer que la deuxième tension de sortie est supérieure à la troisième tension de comparaison pendant une partie de la phase de conduction dudit premier interrupteur.

Selon un mode de réalisation, ladite partie de la phase de conduction s'étend depuis un premier instant postérieur à un deuxième instant initial de ladite phase de conduction et jusqu'à un troisième instant final de ladite phase de conduction.

Selon un mode de réalisation ladite partie a une durée supérieure ou égale à 20 % de la durée de ladite phase de conduction.

Selon un mode de réalisation, le premier interrupteur est un transistor de type PMOS.

Selon un mode de réalisation, ledit comparateur comprend un circuit d'adaptation de son signal de sortie.

Selon un mode de réalisation, ledit circuit d'adaptation de son signal de sortie est une porte logique de type OU.

Selon un mode de réalisation, l'alimentation à découpage comprend, en outre, un circuit de commande dudit premier interrupteur adapté à recevoir une sortie dudit comparateur.

Selon un mode de réalisation, ledit circuit de commande est une machine d'état.

Selon un mode de réalisation, l'alimentation à découpage comprend, en outre, un deuxième interrupteur reliant un troisième noeud recevant une quatrième tension de référence audit deuxième noeud de sortie.

Selon un mode de réalisation, le deuxième interrupteur est un transistor de type NMOS.

Selon un mode de réalisation, l'alimentation à découpage comprend, en outre, une bobine reliant le premier interrupteur audit deuxième noeud de sortie.

Selon un mode de réalisation, l'alimentation à découpage comprend, en outre, un circuit de détection de courant nul adapté à détecter si un courant traversant ladite bobine est nul.

Selon un mode de réalisation, l'alimentation à découpage transitionne d'un mode de conduction continue à un mode à suppression d'impulsion lorsque ladite deuxième tension de sortie est supérieure à ladite troisième tension de comparaison, et que ledit courant traversant ladite bobine est nul.

Selon un mode de réalisation, l'alimentation à découpage transitionne d'un mode à suppression d'impulsion à un mode de conduction continue à lorsque ladite deuxième tension de sortie est inférieure à ladite troisième tension de comparaison, et que ledit courant traversant ladite bobine est nul.

Selon un deuxième aspect, un mode de réalisation prévoit une alimentation à découpage consommant moins d'énergie lors d'une transition d'un mode de suppression d'impulsion (PSK) à un mode de conduction continue (CCM).

Un mode de réalisation prévoit une alimentation à découpage comprenant un comparateur tel que décrit précédemment, et pour laquelle une transition d'un mode de suppression d'impulsions à un mode de conduction continue est réalisée pendant une phase de conduction du transistor NMOS de l'alimentation à découpage.

Un mode de réalisation prévoit une alimentation à découpage comprenant :
- un premier interrupteur reliant un premier noeud recevant une première tension d'alimentation à un deuxième noeud fournissant une deuxième tension de sortie ;
- un deuxième interrupteur reliant un troisième noeud recevant une quatrième tension de référence audit deuxième noeud de sortie ; et
- un comparateur adapté à comparer ladite deuxième tension de sortie à une troisième tension de comparaison,

dans lequel, lorsque l'alimentation à découpage fonctionne dans un mode à suppression d'impulsion, le comparateur est adapté à indiquer que la deuxième tension de sortie est supérieure à la troisième tension de comparaison pendant une partie de la phase de conduction dudit premier interrupteur, et
dans lequel l'alimentation à découpage transitionne d'un mode à suppression d'impulsion à un mode de conduction continue dès que ladite deuxième tension de sortie est inférieure à ladite troisième tension de comparaison.

Un autre mode de réalisation prévoit un procédé de mise en oeuvre d'une alimentation à découpage comprenant :
- un premier interrupteur reliant un premier noeud recevant une première tension d'alimentation à un deuxième noeud fournissant une deuxième tension de sortie ;
- un deuxième interrupteur reliant un troisième noeud recevant une quatrième tension de référence audit deuxième noeud de sortie ; et
- un comparateur adapté à comparer ladite deuxième tension de sortie à une troisième tension de comparaison,

dans lequel, lorsque l'alimentation à découpage fonctionne dans un mode à suppression d'impulsion, le comparateur est adapté à indiquer que la deuxième tension de sortie est supérieure à la troisième tension de comparaison pendant une partie de la phase de conduction dudit premier interrupteur, et,
dans lequel l'alimentation à découpage transitionne d'un mode à suppression d'impulsion à un mode de conduction continue dès que ladite deuxième tension de sortie est inférieure à ladite troisième tension de comparaison.

Selon un mode de réalisation, ladite partie de la phase de conduction s'étend depuis un premier instant postérieur à un deuxième instant initial de ladite phase de conduction et jusqu'à un troisième instant final de ladite phase de conduction.

Selon un mode de réalisation, ladite partie a une durée supérieure ou égale à 20 % de la durée de ladite phase de conduction.

Selon un mode de réalisation, le premier interrupteur est un transistor de type PMOS.

Selon un mode de réalisation, le deuxième interrupteur est un transistor de type NMOS.

Selon un mode de réalisation, l'alimentation à découpage comprend, en outre, un circuit de commande dudit premier interrupteur adapté à recevoir une sortie dudit comparateur.

Selon un mode de réalisation, ledit circuit de commande est une machine d'état.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'une alimentation à découpage ;
la figure 2 représente un exemple d'application du mode de réalisation de la figure 1 ;
la figure 3 représente un schéma illustrant un premier aspect du fonctionnement du mode de réalisation de la figure 1 ;
la figure 4 représente des chronogrammes illustrant un premier mode de mise en oeuvre du mode de réalisation de la figure 1 ;
la figure 5 représente un exemple pratique d'implémentation du premier mode de mise en oeuvre de la figure 4 ;
la figure 6 représente des chronogrammes illustrant un deuxième mode de mise en oeuvre du mode de réalisation de la figure 1 ;
la figure 7 représente un exemple pratique d'implémentation du deuxième mode de mise en oeuvre de la figure 6 ;
la figure 8 représente un schéma illustrant un deuxième aspect du fonctionnement du mode de réalisation de la figure 1 ; et
la figure 9 représente des graphiques illustrant le fonctionnement décrit en relation avec la figure 8.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

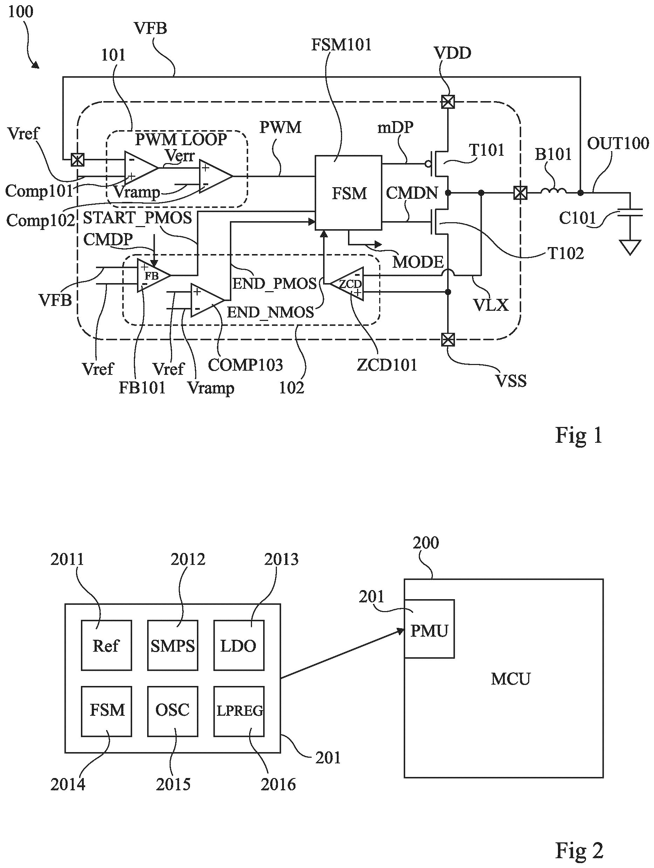

Les modes de réalisation décrits ci-après concernent l'amélioration des alimentations à découpage connues. Les alimentations à découpage sont des circuits permettant de fournir une tension d'alimentation continue, en prenant en entrée généralement une autre tension continue, ou une tension alternative. Les alimentations à découpage concernées ici sont des convertisseurs DC/DC, c'est-à-dire des convertisseurs d'une tension continue en une tension continue. Les figures 1 et 2 détaillent une alimentation à découpage selon un mode de réalisation, et un exemple d'application d'une telle alimentation à découpage.

Les alimentations à découpage comprennent souvent plusieurs modes de fonctionnement dépendant de la taille de la charge connectée en sortie de l'alimentation à découpage, appelée ci-après charge de sortie. Un premier mode de fonctionnement est le mode de conduction continue, ou mode CCM (Continuous Conduction Mode), qui est utilisé pour des charges de sortie élevées. Un deuxième mode de fonctionnement est le mode à suppression d'impulsion, ou mode PSK (Pulse Skipping Mode) ou mode à modulation de fréquence, ou mode PFM (Pulse Fréquence modulation), qui est utilisée pour des charges de sortie faibles.

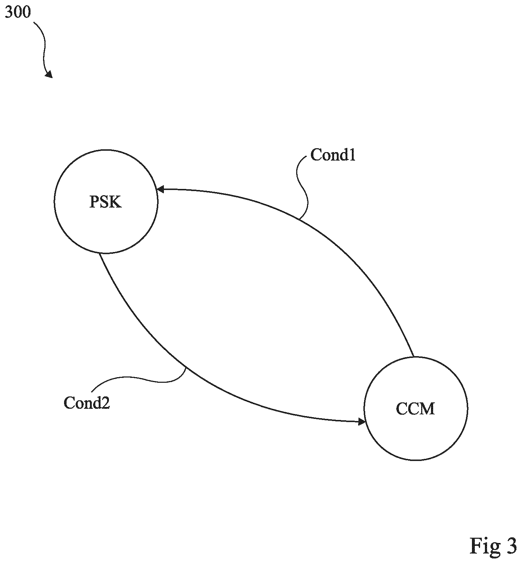

Selon un premier aspect, les modes de réalisation décrits ci-après concernent le cas où une charge de sortie moyenne, c'est-à-dire une charge ni élevée ni faible, est connectée en sortie de l'alimentation à découpage. Dans cette configuration l'alimentation à découpage peut enchainer les transitions entre les modes CCM et PSK et des oscillations peuvent apparaître sur la tension de sortie de l'alimentation à découpage. Pour pallier ce problème, les modes de réalisation décrits ci-après se proposent de modifier le comparateur adapté à déterminer la taille de la charge de sortie. Les figures 3 à 7 détaillent ces modes de réalisation.

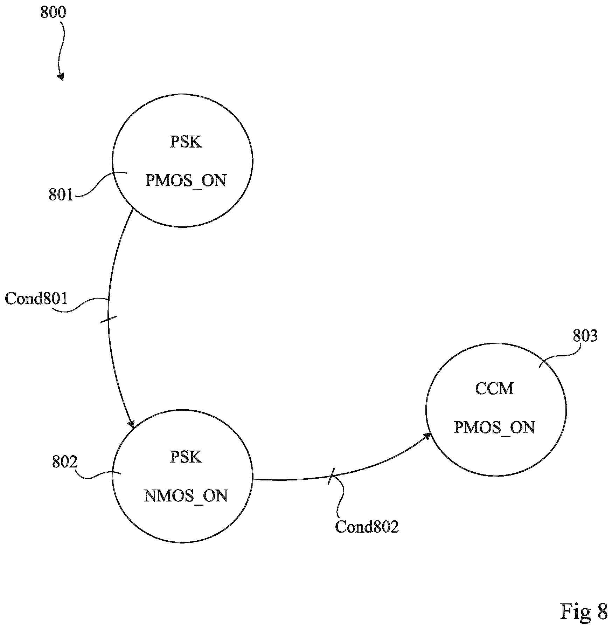

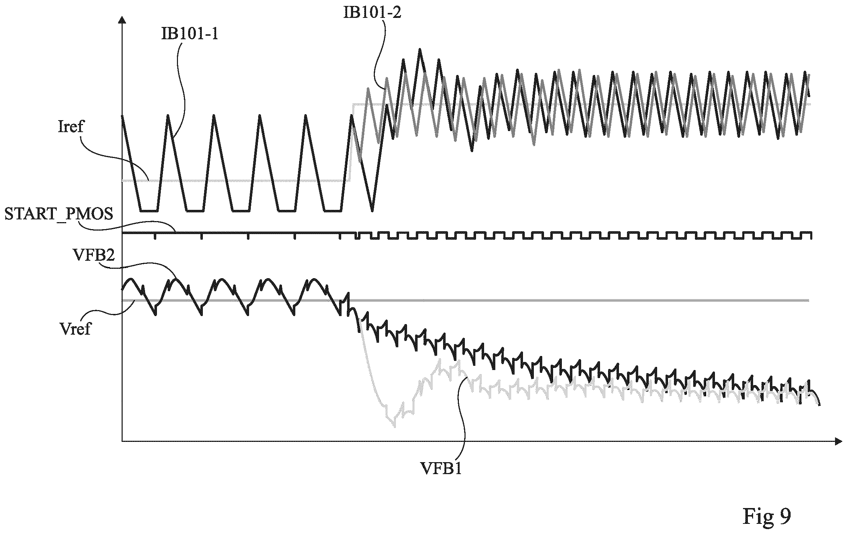

Selon un deuxième aspect, les modes de réalisation décrits ci-après présentent ci-après un moyen d'économiser de l'énergie lors d'une transition d'un mode PSK à un mode CCM. Les figures 8 et 9 détaillent ces modes de réalisation.

La figure 1 est un schéma électrique d'un mode de réalisation d'une alimentation à découpage 100.

L'alimentation à découpage 100 comprend deux interrupteurs T101 et T102 reliés en série entre deux noeuds recevant, pour l'un, une tension d'alimentation continue VDD, et, pour l'autre, une tension de référence VSS, par exemple la masse. Une première borne de conduction de l'interrupteur T101 est reliée, de préférence connectée, au noeud fournissant la tension d'alimentation VDD, et une deuxième borne de conduction de l'interrupteur T101 est reliée, de préférence connectée, à une première borne de l'interrupteur T102. Une deuxième borne de conduction de l'interrupteur T102 est reliée, de préférence connectée, au noeud fournissant la tension de référence VSS.

Les interrupteurs T101 et T102 sont, par exemple, des transistors, et, plus particulièrement, des transistors à effet de champ à grille métal-oxyde (metal-oxide-semiconductor field-effect transistor), ou transistors MOSFET, ou transistors MOS. Plus précisément, le transistor T101 est transistors MOS à canal P, ou transistors MOS de type P, ou transistors PMOS, et le transistor T102 est un transistor MOS à canal N, ou transistor MOS de type N, ou transistor NMOS. D'autres types d'interrupteurs apparaîtront simplement à la personne du métier, et, en particulier, d'autres types de transistors, comme des transistors bipolaires, peuvent être utilisés ici. Par ailleurs, il est présenté ici des interrupteurs T101 et T102 ayant des commandes inverses, mais il est à la portée de la personne du métier de réaliser l'alimentation à découpage 100 avec des interrupteurs ayant des commandes semblables.

L'alimentation à découpage 100 comprend, en outre, un circuit de commande FSM101 (FSM) adapté à commander les interrupteurs T101 et T102. Selon un exemple, le circuit de commande FSM101 est un automate, comme une machine d'états ou une machine à états finis (Finite-State machine). Le circuit de commande reçoit, en entrée, plusieurs signaux de la part des autres circuits composant l'alimentation à découpage 100, décrits ci-après, et fournit, en sortie, un signal de commande CMDP destiné à commander l'interrupteur T101, et un signal de commande CMDN destiné à commander l'interrupteur T102. C'est le circuit de commande FSM101 qui gère les modes de fonctionnement de l'alimentation à découpage 100, c'est-à-dire les modes CCM et PSK. Pour cela, le circuit de commande FSM101 peut, en outre, fournir un signal MODE indiquant le mode en fonctionnement actuel de l'alimentation à découpage 100.

L'alimentation à découpage comprend, outre, une bobine B101 et un condensateur de sortie C101. La bobine B101 est reliée au noeud milieu entre les interrupteurs T101 et T102 et à un noeud de sortie OUT100 de l'alimentation à découpage 100. Ainsi, une première borne de conduction de la bobine B101 est reliée, de préférence connectée, au noeud milieu entre les interrupteurs T101, et une deuxième borne de conduction de la bobine B101 est reliée, de préférence connectée, au noeud OUT100. Le noeud OUT100 fournit une tension de retour VFB qui est une image de la tension de sortie de l'alimentation à découpage 100. Le condensateur C101 peut être externe à l'alimentation à découpage 100, et est relié entre le noeud de sortie OUT100 et la masse. Ainsi, une première borne de conduction du condensateur C101 est reliée, de préférence connectée, au noeud OUT100, et une deuxième borne de conduction du condensateur C101 est reliée, de préférence connectée, au noeud recevant la tension de référence VSS, ou à un noeud recevant une autre tension de référence différente à la tension de référence VSS.

L'alimentation à découpage comprend, en outre, une boucle de modulation de largeur d'impulsion 101 (PWM Loop) comprenant un amplificateurs inverseur Comp101 et un comparateur Comp102 montés en cascade. L'amplificateur inverseur Comp101 reçoit, sur une entrée non inverseuse, une tension de comparaison Vref, ou tension de comparaison Vref, et reçoit, sur une entrée inverseuse, une tension de retour VFB de l'alimentation à découpage 100. L'amplificateur inverseur Comp101 fournit, en sortie, une tension d'erreur Verr. L'amplificateur inverseur Comp101 permet d'amplifier la différence de tension entre les tensions qu'il reçoit en entrée. Le comparateur Comp102 reçoit, sur une entrée non inverseuse, la tension d'erreur Verr, et reçoit, sur une entrée inverseuse, une tension de rampe Vramp. La tension de rampe Vramp est générée par un circuit générateur de rampe de l'alimentation à découpage 100 qui n'est pas représenté ici. Le comparateur Comp102 fournit, en sortie, une tension de modulation de largeur d'amplitude PWM qui est fournie au circuit de commande FSM101.

L'alimentation à découpage comprend, en outre, des circuits de comparaison 102 permettant de déterminer l'état de fonctionnement de l'alimentation à découpage 100. Les circuits de comparaison 102 comprennent :
- un circuit ZCD101 (ZCD) de détection d'un courant nul ;
- un circuit FB101 (FB) de comparaison de la tension de retour VFB ; et
- un circuit Comp103 de comparaison de la tension de rampe Vramp avec la tension de comparaison Vref.

Le circuit ZCD101 (ZCD) de détection d'un courant nul est adapté à détecter si le courant traversant la bobine B101 change de signe. Le circuit ZCD101 est un comparateur. Pour cela, le circuit ZCD101 reçoit, sur une entrée non inverseuse, la tension de référence VSS, et reçoit, sur une entrée inverseuse, une tension VLX fournie par le noeud milieu entre les interrupteurs T101 et T102. Le circuit ZCD101 fournit, en sortie, un signal END_NMOS indiquant la fin d'une phase de conduction de l'interrupteur T102.

Le circuit FB101 (FB) de comparaison de la tension de retour VFB permettant d'évaluer la taille de la charge de sortie de l'alimentation à découpage 100. Pour cela, le circuit FB101 reçoit, sur une entrée non inverseuse, la tension de retour VFB, et reçoit, sur une entrée inverseuse, la tension de comparaison Vref. Le circuit FB101 fournit, en sortie, un signal START_PMOS indiquant le début d'une phase de conduction de l'interrupteur T101.

Le circuit Comp103 de comparaison de la tension de rampe Vramp reçoit, sur une entrée non inverseuse, la tension de comparaison Vref, et reçoit, sur une entrée inverseuse, la tension de rampe Vramp. Le circuit Comp103 fournit, en sortie, un signal END_PMOS indiquant la fin d'une phase de conduction de l'interrupteur T102. Le circuit Comp103 permet de définir la durée d'une phase de conduction de l'interrupteur T101.

Le fonctionnement de l'alimentation à découpage est décrit en plus en détails en relation avec les modes de réalisation décrits en relation avec les figures 3 à 9.

La figure 2 représente, très schématiquement et sous forme de blocs, un exemple d'application d'une alimentation à découpage du type de l'alimentation à découpage 100 décrite en relation avec la figure 1.

La figure 2 illustre, plus particulièrement, un microcontrôleur 200 (MCU) et son unité d'alimentation 201

(PMU). Selon un exemple, l'unité d'alimentation 201 comprend :
- un circuit de génération de signaux de référence 2011 (Ref) ;
- une alimentation à découpage 2012 (SMPS) du type de l'alimentation à découpage 100 de la figure 1 ;
- un ou plusieurs circuits convertisseurs de tension 2013 (LDO) ;
- une ou plusieurs machines d'état 2014 (FSM) ;
- un ou plusieurs circuits oscillants 2015 (OSC) ; et
- un ou plusieurs circuits de régulation 2016 (LPREG), par exemple des circuits de régulation à basse puissance.

D'autres applications de l'alimentation à découpage 100 sont les suivantes. Une telle alimentation à découpage peut être utilisée pour alimentée en énergie n'importe quel circuit ou dispositif électronique plus ou moins complexe.

La figure 3 est un diagramme d'état 300 illustrant le fonctionnement de l'alimentation à découpage 100 décrit en relation avec la figure 1 selon un premier aspect.

Comme décrit précédemment, l'alimentation à découpage 100 comprend plusieurs modes de fonctionnement dépendant de la taille de sa charge de sortie. Plus particulièrement, l'alimentation à découpage 100 comprend deux modes de fonctionnement, un mode de conduction continue, ou mode CCM (Continuous Conduction Mode), qui est utilisé pour des charges de sortie élevées, et un mode à suppression d'impulsion, ou mode PSK (Pulse Skipping Mode) qui est utilisé pour des charges de sortie faibles.

Lorsque l'alimentation à découpage 100 est dans le mode PSK, elle charge sa bobine B101 en utilisant des pics de tensions séparés les uns des autres par une durée dépendant la tension demandée par la charge de sortie. Plus la charge est faible, plus les pics sont séparés par une grande durée.

Lorsque l'alimentation à découpage 100 est dans le mode CCM, elle charge sa bobine B101 en continue en envoyant une tension oscillante à la bobine B101.

Que ce soit en mode PSK ou en mode CCM, la tension alimentant la bobine B101 est obtenue en commandant les interrupteurs T101 et T102.

Pour passer d'un mode à un autre, il est nécessaire d'évaluer la taille de la charge de sortie. Pour cela, la tension de sortie fournie à la charge de sortie, dont l'image est la tension de retour VFB, est comparée à la tension de comparaison Vref. Le résultat de cette comparaison indiquant le mode de fonctionnement dans lequel l'alimentation à découpage doit se trouver.

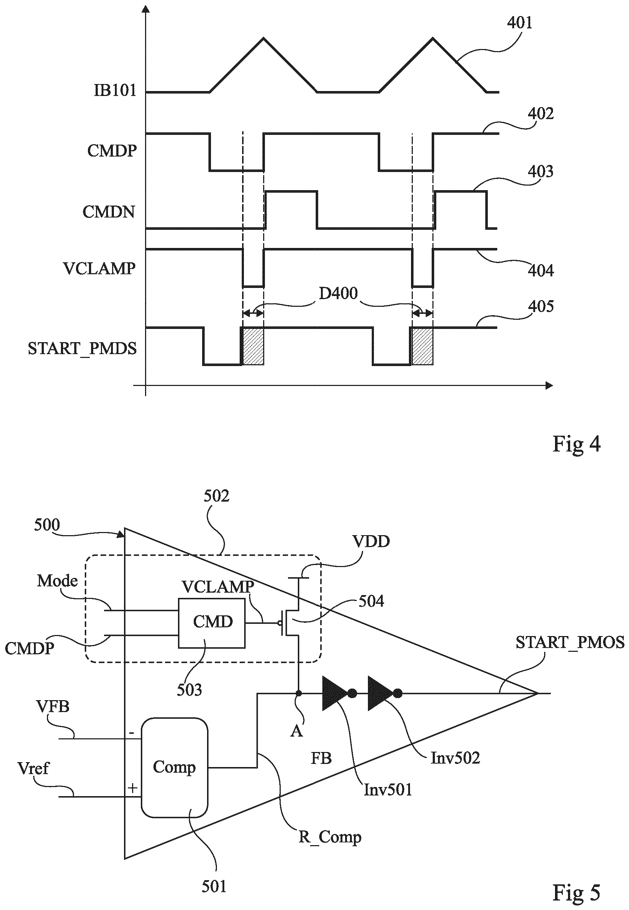

Plus particulièrement, lorsque la tension de retour VFB est inférieure à la tension de comparaison Vref, l'alimentation à découpage 100 est censée fonctionner en mode CCM, et lorsque la tension de retour VFB est supérieure à la tension de comparaison Vref, l'alimentation à découpage 100 est censée fonctionner en mode PSK. Cette comparaison est mise en oeuvre par le comparateur FB101 décrit en relation avec la figure 1. Cette comparaison est décrite plus en détails en relation avec les figures 4 à 6.

Cependant, pour effectivement lancer une transition entre un mode et un autre, et pour éviter des changements incessants lorsque la charge varie autour d'une valeur moyenne, il est nécessaire de prendre en compte un deuxième critère. Ainsi, pour passer d'un état à un autre, il faut prendre en compte le résultat de la comparaison de la tension de retour VFB avec la tension de comparaison Vref au moment où le courant IB101 traversant la bobine B101 s'annule. Le courant IB101 est donc surveillé par le circuit ZCD101 de détection de courant nul décrit en relation avec la figure 1.

Ainsi, pour passer du mode CCM au mode PSK, il est nécessaire de satisfaire deux conditions Cond1 : avoir la tension de retour VFB supérieure à la tension de comparaison Vref, et avoir le courant IB101 traversant la bobine B101 qui s'annule.

Pour passer du mode PSK au mode CCM, il est nécessaire de satisfaire deux conditions Cond2: avoir la tension de retour VFB inférieure à la tension de comparaison Vref, et avoir le courant IB101 traversant la bobine B101 qui s'annule.

Comme décrit précédemment, pour surveiller la réalisation de ces conditions le comparateur FB101 et le circuit de détection ZCD101 sont mis en oeuvre. Cependant, selon un mode de réalisation, pour pallier à un éventuel retard du comparateur FB101, le résultat du comparateur FB101 n'est pas pris en compte pendant toute la phase de conduction de l'interrupteur T101. Cela est expliqué plus en détail en relation avec les figures 4 à 7.

La figure 4 représente des chronogrammes illustrant un premier mode de mise en oeuvre de l'alimentation à découpage de la figure 1 dans un mode PSK.

La figure 4 comprend les chronogrammes suivants :
- un chronogramme 401 illustrant une évolution temporelle théorique du courant IB101 traversant la bobine B101 ;
- un chronogramme 402 illustrant l'évolution temporelle du signal de commande CMDP de l'interrupteur T101 ;
- un chronogramme 403 illustrant l'évolution temporelle du signal de commande CMDN de l'interrupteur T102 ;
- un chronogramme 404 illustrant l'évolution temporelle d'une tension VCLAMP interne au comparateur FB101 décrit en relation avec la figure 1 ; et
- un chronogramme 405 illustrant l'évolution temporelle du signal START_PMOS de sortie du comparateur FB101 décrit en relation avec la figure 1.

Comme décrit précédemment, dans un mode PSK, le courant IB101 traversant la bobine B101 présente, périodiquement, des impulsions séparées par une durée dépendant de la valeur de la tension de retour VFB. Plus particulièrement, la bobine B101 est chargée lorsque l'interrupteur T101 est passant, c'est-à-dire pendant une phase de conduction de l'interrupteur T101, et est déchargée lorsque l'interrupteur T102 est passant, c'est-à-dire pendant une phase de conduction de l'interrupteur T102.

Une phase de conduction de l'interrupteur T101 est mise en oeuvre de la façon suivante. Dès que la tension de retour VFB devient inférieure à la tension de comparaison Vref, le signal START_PMOS présente un front descendant, ce qui entraine un front descendant du signal de commande CMDP et l'interrupteur T101 devient passant. La phase de conduction de l'interrupteur T101 s'achève ensuite lorsque la tension Vramp (non représentée en figure 4) devient supérieure à la tension de comparaison Vref, ce qui provoque un changement d'état du signal END_PMOS, c'est-à-dire un front montant ou descendant. Le changement d'état du signal END_PMOS entraine un front montant du signal de commande CMDP qui indique la fin de la phase de conduction de l'interrupteur T101.

Une phase de conduction de l'interrupteur T102 est mise en oeuvre de la façon suivante. La phase de conduction de l'interrupteur T102 démarre lorsque la phase de conduction de l'interrupteur T101 s'achève, c'est-à-dire lorsque la tension de rampe Vramp devient supérieure à la tension de comparaison Vref. La phase de conduction de l'interrupteur T102 s'achève lorsque le courant IB101 traversant la bobine B101 devient nul, cela provoque un changement d'état du signal END_NMOS (non représenté en figure 4) qui entraine lui-même un front descendant du signal de commande CMDN.

Comme dit précédemment, la transition du mode PSK au mode CCM nécessite la mise en oeuvre du comparateur FB101 et du circuit de détection ZCD101. Il a été observé par les inventeurs pendant des phases de test, que le comparateur FB101 peut présenter des retards qui entraînent eux-mêmes des retards dans les transitions du mode PSK au mode CCM. Pour pallier à ce problème, les inventeurs ont décidé de ne pas prendre en compte le résultat du comparateur FB101 pendant toute la durée de la phase de conduction de l'interrupteur T101. Plus particulièrement, le fonctionnement du comparateur FB101 est modifié pour être, en outre, commandé par la tension VCLAMP, qui définit une durée D400 pendant laquelle la sortie du comparateur FB101 indique que la tension de retour VFB est supérieure à la tension de comparaison Vref quelle que soit la valeur de la tension de retour VFB. Autrement dit, le fonctionnement du comparateur FB101 est modifié pour que, pendant une partie de la phase de conduction de l'interrupteur T101, la sortie du comparateur FB101 indique que la tension de retour VFB est supérieure à la tension de comparaison Vref quelle que soit la valeur de la tension de retour VFB. Un tel comparateur FB101 modifié est décrit plus en détail en relation avec la figure 5.

Selon un premier mode de réalisation, la durée D400 est définie comme étant comprise de 20 % à 100 % de la durée de la phase de conduction de l'interrupteur T101. De plus, cette durée D400 est placée en fin de phase de conduction de l'interrupteur T101, c'est-à-dire démarre après le début de la phase de conduction de l'interrupteur T101 et s'étend jusqu'à la fin de la phase de conduction de l'interrupteur T101. Dit autrement, la partie de la phase de conduction s'étend depuis un premier instant postérieur à un deuxième instant initial de ladite phase de conduction et jusqu'à un troisième instant final de ladite phase de conduction.

La figure 5 représente un exemple de réalisation d'un comparateur 500 adapté à servir de comparateur FB101 dans l'alimentation à découpage 100 décrite en relation avec la figure 1.

Le comparateur 500 comprend un étage de comparaison 501 (Comp) adapté à prendre en entrée les tensions VFB et Vref. Plus particulièrement, l'étage 501 reçoit sur une entrée non inverseuse la tension de comparaison Vref, et sur une entrée inverseuse la tension de retour VFB. L'étage 501 fournit, en sortie une signal de résultat R_Comp. Cet étage 501 n'est pas détaillé ici puisqu'il est à la portée de la personne du métier.

Le comparateur 500 comprend, en outre, un circuit 502 d'adaptation du signal de sortie START_PMOS du comparateur 500. Le circuit 502 reçoit la tension d'alimentation VDD et les signaux Mode et CMDP. Le circuit 502 comprend un circuit de commande 503 (CMD) adapté à générer la tension VCLAMP qui permet de définir la durée D400, et un interrupteur 504. L'interrupteur 504 reçoit sur une première borne de conduction la tension d'alimentation VDD, et a une deuxième borne de conduction reliée, de préférence connectée, à la sortie de l'étage de comparaison 501. L'interrupteur 504 reçoit sur sa borne de commande la tension VCLAMP.

Le comparateur 500 comprend, en outre et selon un exemple, deux circuits inverseurs Inv501 et Inv502. Une entrée du circuit inverseur Inv501 est reliée, de préférence connectée, au noeud A, et une sortie du circuit inverseur Inv501 est reliée, de préférence connectée, à l'entrée du circuit inverseur Inv502. Une sortie du circuit inverseur Inv502 fournit le signal de sortie START_PMOS du comparateur 500.

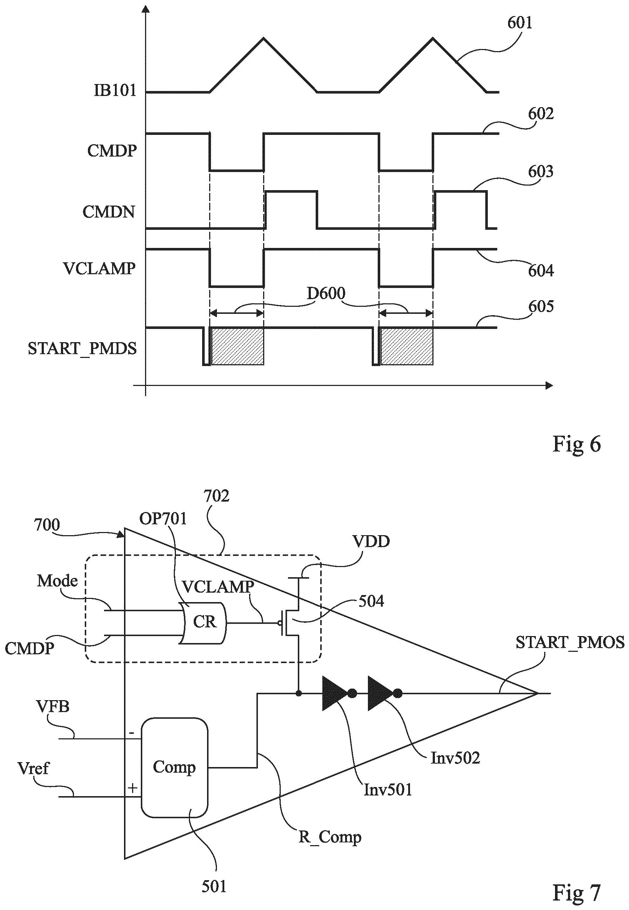

La figure 6 représente des chronogrammes illustrant un deuxième mode de mise en oeuvre préféré de l'alimentation à découpage de la figure 1 dans un mode PSK.

La figure 6 comprend les chronogrammes suivants :
- un chronogramme 601 illustrant une évolution temporelle théorique du courant IB101 traversant la bobine B101 ;
- un chronogramme 602 illustrant l'évolution temporelle du signal de commande CMDP de l'interrupteur T101 ;
- un chronogramme 603 illustrant l'évolution temporelle du signal de commande CMDN de l'interrupteur T102 ;
- un chronogramme 604 illustrant l'évolution temporelle d'une tension VCLAMP interne au comparateur FB101 décrit en relation avec la figure 1 ; et
- un chronogramme 605 illustrant l'évolution temporelle du signal START_PMOS de sortie du comparateur FB101 décrit en relation avec la figure 1.

Ce deuxième mode de mise en oeuvre est similaire au premier mode de mise en oeuvre décrit en relation avec la figure 4. Les éléments communs à ces deux modes de mise en oeuvre ne sont pas décrits de nouveau en détails. Seules les différences entre ces modes de mise sont mises en exergue.

Comme dit précédemment, pour éviter des problèmes de retard au niveau du comparateur FB101, la tension VCLAMP est utilisée pour modifier son fonctionnement et introduire une durée D600 pendant la phase de conduction de l'interrupteur T101. La durée D600 est supérieure à la durée D400 décrite en relation avec la figure 4. La durée D600 est égale à la durée D400 maximale, c'est-à-dire égale à la durée d'une phase de conduction de l'interrupteur T101 dont on a ôté le temps d'une impulsion permettant de démarrer ladite phase de conduction. Un comparateur FB101 modifié pour obtenir la durée D600 est décrit plus en détail en relation avec la figure 7.

La figure 7 représente un exemple de réalisation d'un comparateur 700 adapté à servir de comparateur FB101 dans l'alimentation à découpage 100 décrite en relation avec la figure 1.

Le comparateur 700 est similaire au comparateur 500 décrit en relation avec la figure 5. Les éléments communs aux comparateurs 500 et 700 ne sont pas de nouveau décrits en détails. Seules les différences entre les comparateurs 500 et 700 sont mises en exergue.

Ainsi, le comparateur 700 comprend :
- l'étage de comparaison 501 (Comp) ;
- un circuit 702 d'adaptation du signal de sortie START_PMOS ; et
- les circuit inverseurs Inv501 et Inv502.

Le circuit 702 reçoit la tension d'alimentation VDD et les signaux Mode et CMDP. Le circuit 702 comprend une porte logique OR701 (OR) de type OU, remplaçant le circuit de commande 503 (CMD), et un interrupteur 504. Une première borne d'entrée de la porte OR701 reçoit le signal Mode, et une deuxième borne d'entrée de la porte OR701 reçoit le signal de commande CMDP. Une borne de sortie de la porte logique OR701 fournit la tension VCLAMP. L'interrupteur 504 reçoit sur une première borne de conduction la tension d'alimentation VDD, et a une deuxième borne de conduction reliée, de préférence connectée, à la sortie de l'étage de comparaison 501. L'interrupteur 504 reçoit sur sa borne de commande la tension VCLAMP.

La figure 8 est un diagramme d'état 800 illustrant le fonctionnement de l'alimentation à découpage 100 décrit en relation avec la figure 1 selon un deuxième aspect.

Comme décrit précédemment, l'alimentation à découpage 100 comprend deux modes de fonctionnement, le mode CCM et le mode PSK. Le diagramme d'état 800 de la figure 8 concerne la transition du mode PSK au mode CCM.

Après avoir mis en oeuvre l'alimentation à découpage 100 de la figure 1 en utilisant l'un ou l'autre des circuits de comparaison 500 ou 700 des figures 5 ou 7, les inventeurs ont trouvé une nouvelle manière de réaliser une transition entre le mode PSK et le mode CCM qui économise de l'énergie.

Le mode de mise en oeuvre d'une transition entre le mode PSK et le mode CCM décrit ci-après se propose de n'effectuer une telle transition que pendant une phase de conduction de l'interrupteur T102. Cela est possible grâce à l'utilisation du comparateurs 500 ou 700.

Lorsque l'alimentation à découpage 100 fonctionne selon ce mode de mise en oeuvre, l'alimentation à découpage passe du mode PSK au mode CCM uniquement pendant une phase de conduction de l'interrupteur T102 et lorsque la tension de retour VFB devient inférieure à la tension de comparaison Vref. Le passage à zéro du courant traversant la bobine B101 n'est plus pris en compte. En effet, lorsque l'on utilise les modes de mise en oeuvre des figures 4 à 6, la sortie du comparateur FB101 ne peut pas être prise en compte pendant une phase de conduction de l'interrupteur T101, puisque celle-ci est modifiée. Vérifier l'état du courant IB101 ne servait qu'à éviter de détecter de façon erronée une transition pendant une phase de conduction de l'interrupteur T101. Plus particulièrement, la sortie du circuit ZCD101 n'était utilisée que lors d'une phase de conduction de l'interrupteur T102 afin d'éviter une fausse détection liée à la lenteur de circuit FB101, ce qui forçait d'attendre que la bobine se vide de son courant.

Autrement, une phase de transition du mode PSK au mode CCM comprenant la succession d'état suivant :
- un état 801 (PSK PMOS_ON) où l'alimentation à découpage 100 est dans un mode PSK et pendant une phase de conduction de l'interrupteur T101 ;
- un état 802 (PSK NMOS_ON) où l'alimentation à découpage 100 est dans un mode PSK et pendant une phase de conduction de l'interrupteur T102 ;
- un état 803 (CCM PMOS_ON) où l'alimentation à découpage 100 entre dans un mode CCM par une phase de conduction de l'interrupteur T101.

Une transition entre l'état 801 et l'état 802 est effectuée de la manière décrite en relation avec la figure 4, noté condition Cond801, c'est-à-dire en utilisant la comparaison de la tension Vramp et de la tension de comparaison Vref.

Une transition entre l'état 802 et l'état 803 est effectuée en surveillant une seule condition Cond802, le résultat de la comparaison de la tension de retour VFB et de la tension de comparaison Vref.

Un avantage de ce mode de réalisation est qu'il permet aussi de transitionner rapidement d'un mode PSK à un mode CCM lorsque la tension de retour VFB baisse brusquement. En effet, comme seul ce paramètre est pris en compte, il est pris en compte sans délai.

La figure 9 comprend des courbes illustrant un avantage de la mise en oeuvre décrite en relation avec la figure 8.

La figure 9 comprend les courbes suivantes :
- une courbe Iref représentant la valeur moyenne à atteindre du courant IB101 traversant la bobine B101 ;
- une courbe IB101-1 représentant l'évolution du courant IB101 traversant la bobine B101 sans la mise en oeuvre du mode de mise en oeuvre de la figure 8 ;
- une courbe IB101-2 représentant l'évolution du courant IB101 traversant la bobine B101 avec la mise en oeuvre du mode de mise en oeuvre de la figure 8 ;
- une courbe START_PMOS représentant l'évolution du signal START_PMOS ;
- une courbe VFB1 représentant l'évolution de la tension de retour VFB sans la mise en oeuvre du mode de mise en oeuvre de la figure 8 ; et
- une courbe VFB2 représentant l'évolution de la tension de retour VFB avec la mise en oeuvre du mode de mise en oeuvre de la figure 8.

Les courbes de la figure 9 illustre plus particulièrement une transition du mode PSK à un mode CCM et compare le mode de mise en oeuvre de la figure 8 avec le fonctionnement décrit en relation avec la figure 3. Ainsi, on considère ici deux alimentations à découpage 901 et 902, l'alimentation 901 fonctionnant selon le fonctionnement décrit en relation avec la figure 3, et l'alimentation 902 utilisant le mode de mise en oeuvre de la figure 8. Plus précisément, les alimentations à découpage 901 et 902 fonctionne dans un mode PSK dans une partie gauche de la figure 9, et fonctionne dans un mode CCM dans une partie droite de la figure 9. La transition a lieu dans une partie centrale de la figure 9.

On remarque qu'utiliser le mode de mise en oeuvre de la figure 8 permet de changer de mode avant que la bobine B101 de l'alimentation 902 ne soit complètement déchargée. Cela permet donc de changer de mode sans avoir besoin de recharger la bobine, ce qui est généralement mis en oeuvre par un circuit de boost. Le mode de mise en oeuvre de la figure 8 permet donc d'accélérer une transition d'un mode PSK à un mode CCM tout en économisant de l'énergie.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Alimentation à découpage comprenant :
- un premier interrupteur (T101) reliant un premier noeud recevant une première tension d'alimentation (VDD) à un deuxième noeud fournissant une deuxième tension de sortie (VFB) ;
- un deuxième interrupteur (T102) reliant un troisième noeud recevant une quatrième tension de référence (VSS) audit deuxième noeud de sortie ; et
- un comparateur adapté à comparer ladite deuxième tension de sortie (VFB) à une troisième tension de comparaison (Vref),
dans lequel, lorsque l'alimentation à découpage fonctionne dans un mode à suppression d'impulsion (PSK), le comparateur est adapté à indiquer que la deuxième tension de sortie (VFB) est supérieure à la troisième tension de comparaison (Vref) pendant une partie de la phase de conduction dudit premier interrupteur (T101), et
dans lequel l'alimentation à découpage transitionne d'un mode à suppression d'impulsion (PSK) à un mode de conduction continue (CCM) dès que ladite deuxième tension de sortie (VFB) est inférieure à ladite troisième tension de comparaison (Vref).

2. Procédé de mise en oeuvre d'une alimentation à découpage comprenant :
- un premier interrupteur (T101) reliant un premier noeud recevant une première tension d'alimentation (VDD) à un deuxième noeud fournissant une deuxième tension de sortie (VFB) ;
- un deuxième interrupteur (T102) reliant un troisième noeud recevant une quatrième tension de référence (VSS) audit deuxième noeud de sortie ; et
- un comparateur adapté à comparer ladite deuxième tension de sortie (VFB) à une troisième tension de comparaison (Vref),
dans lequel, lorsque l'alimentation à découpage fonctionne dans un mode à suppression d'impulsion (PSK), le comparateur est adapté à indiquer que la deuxième tension de sortie (VFB) est supérieure à la troisième tension de comparaison (Vref) pendant une partie de la phase de conduction dudit premier interrupteur (T101), et
dans lequel l'alimentation à découpage transitionne d'un mode à suppression d'impulsion (PSK) à un mode de conduction continue (CCM) dès que ladite deuxième tension de sortie (VFB) est inférieure à ladite troisième tension de comparaison (Vref).

3. Alimentation selon la revendication 1, ou procédé selon la revendication 2, dans lequel ladite partie de la phase de conduction s'étend depuis un premier instant postérieur à un deuxième instant initial de ladite phase de conduction et jusqu'à un troisième instant final de ladite phase de conduction.

4. Alimentation selon la revendication 1 ou 3, ou procédé selon la revendication 2 ou 3, dans lequel ladite partie a une durée (D400 ; D600) supérieure ou égale à 20 % de la durée de ladite phase de conduction.

5. Alimentation selon l'une quelconque des revendications 1, 3 ou 4, ou procédé selon l'une quelconque des revendications 2 à 4, dans lequel le premier interrupteur (T101) est un transistor de type PMOS.

6. Alimentation selon l'une quelconque des revendications 1, 3 à 5, ou procédé selon l'une quelconque des revendications 2 à 5, dans lequel le deuxième (T102) interrupteur est un transistor de type NMOS.

7. Alimentation selon l'une quelconque des revendications 1, 3 à 6, ou procédé selon l'une quelconque des revendications 2 à 6, dans lequel l'alimentation à découpage comprend, en outre, un circuit de commande (FSM101) dudit premier interrupteur (T101) adapté à recevoir une sortie dudit comparateur (FB101 ; 500 ; 700).

8. Alimentation ou procédé selon la revendication 7, dans lequel ledit circuit de commande (FSM101) est une machine d'état.
